(19) Europäisches Patentamt
European Patent Office
Office européen des brevets

(11) Publication number: **0 143 435 B1**

(12) # EUROPEAN PATENT SPECIFICATION

(45) Date of publication of patent specification: **20.02.91** (51) Int. Cl.[5]: **H04M 19/02**

(21) Application number: **84114086.6**

(22) Date of filing: **22.11.84**

(54) **Improvements in or relating to telephone circuits, monolithically integrated, for ring trip detection.**

(30) Priority: **23.11.83 IT 2383283**

(43) Date of publication of application:
**05.06.85 Bulletin 85/23**

(45) Publication of the grant of the patent:
**20.02.91 Bulletin 91/08**

(84) Designated Contracting States:
**AT BE CH DE FR GB IT LI LU NL SE**

(56) References cited:
**EP-A- 0 089 687**

(73) Proprietor: **SGS-THOMSON MICROELECTRONICS s.r.l.**
**Via C. Olivetti, 2**
**I-20041 Agrate Brianza Milano(IT)**

(72) Inventor: **Siligoni, Marco**
**Via Zara, 9**
**I-20010 Vittuone (MI)(IT)**
Inventor: **Saviotti, Vanni, Dr. Phys.**
**Via Tevere, 20**
**I-20052 Monza (MI)(IT)**

(74) Representative: **Klunker, Hans-Friedrich, Dr. et al**
**Patentanwälte Klunker . Schmitt-Nilson . Hirsch Winzererstrasse 106**
**D-8000 München 40(DE)**

**EP 0 143 435 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to telephone circuits for ring trip detection, in particular to telephone circuits, monolithically integrated, for ring trip detection, that can constitute an interface between the user's telephone line and the user's circuit line under the control of the telephone exchange control equipment.

A user's telephone apparatus is connected to the telephone exchange by means of a line whose terminals are connected, parallel to one another, both to the conversation circuit and the ringing mechanism.

In series with the conversation circuit there is a switch which is turned off when an off-hook condition takes place; instead, in series with the ringing mechanism there is a capacitor to decouple the ringing mechanism from the direct current line.

The line is in fact powered by a direct current generator, in series to which an alternating current generator is connected, which represents the ringing signal generator when the telephone exchange control equipment sends a call signal to the user.

Therefore, when there is a call, a ringing alternate current to which a d.c. component is superimposed, in the off-hook condition, appears on the line.

As the ringing signal generally has a frequency of 25 or 50 Hz, with an effective voltage value rather high (60 to 80V) in respect to the normal telephone conversation signals, if it is not immediatly interrupted at the moment of the off-hook, it is converted by the conversation circuit to a high intensity acoustical signal, which can be detrimental to the hearing of the user.

With the introduction of electronic circuits for the detection of the off-hook condition directly in the user's connections in the exchange, in order to be able to opportunely interrupt the generation of the ringing rhythm the problem arises to immediatly recognize the off-hook condition from the variations of the line current, by sensing a possible presence of a d.c. component on the user's telephone line, so that the central control equipment can interrupt the sending of call signals.

In effect it is not easy to execute such a sensing when the a.c. current due to the ringing rhythm has an effective value much larger than the value of the direct current present after the off-hook.

The large diversity of impedance that can exist between the various lines and the user's telephone apparatuses also makes it necessary to design circuits for the ring trip detection that have a sufficent sensitivity, taking into account the worst cases that can be found.

If the line current is only alternate, as when in the ringing phase the off-hook hasn't yet happened, the line current wave form is constituted of a succession of positive and negative parts which are symmetric in respect to the points of zero amplitude, even when the wave form is not perfectly sinusoidale, as for example when there are non-linear components in the electric circuits connected to the line.

Therefore, the duration times of the semiperiods, positive and negative, are equal, as are equal the subtense areas defined by the wave form in the positive and negative semiperiods.

When the off-hook takes place, and conversation circuit direct current is added to the alternate current of the ringing signal, in the semiperiods in which the sign of the alternate current is equal to that of the direct current the "bays" of the wave form of the line current result to be more ample than those in which the alternate current and the direct current have opposite signs.

Therefore, when the off-hook happens, the positive semi-periods of the line current in the ringing phase have a different duration than that of the negative semiperiods and the area defined by the wave form of the current in the positive semiperiods also results to be different from that of the negative semiperiods.

The differences are determined by the amplitude of the direct current.

Two distinct procedures are utilized in the prior art for the ring trip detection. They are based on the detection of such differences between the positive semiwave and the negative semiwave of the line alternate current, determined by any direct current component.

A first procedure, based on the comparison, on one or more periods, of the duration times of the positive and negative semiperiods, is for example made by counting the number of impulses, having a predetermined duration time, that can intervene in such semiperiods, with one of the methods known to a person skilled in the art (EP-A-0089687).

The control devices that actuate such procedure, do not however guarantee a sure detection of the off-hook condition in all of the conditions of the telephone network that can arise in practice. In fact, in a telephone line there is always some stray current that, adding to the line alternate current, can shift the point of separation between the positive and negative semiperiods of the current wave form or make it uncertain.

In this way there is created an "indetermination interval" of the detection, whose amount depends on such stray current which, in turn, depend on the different lengths and impedences of the lines.

Therefore such control devices can be effectively utilized only when the conditions of the line

guarantee an indetermination interval under predetermined values.

The second procedure is actuated by measuring, on one or more periods, the total area defined by the wave form, attributing a positive value to the positive "bays" area and a negative value to that of the negative "bays" : if the value of the total area is not equal to zero and exceeds a predetermined threshold value for a sure detection signifies that there is a direct component in the line alternate current, i.e. the off-hook has taken place and a command can be given to the exchange equipment, to interrupt the sending of call signals.

Such a measure, defined as a measure of an "avarage value" can be effected by means of an integrator circuit that generates a signal proportional to the integral of the line current on one or more full periods.

The generated signal has a zero value, or a value under a predetermined threshold, only when, in the ringing phase, the off-hook has not yet taken place.

Such an integrator, as is well known to a person skilled in the art, can be realized simply with a RC type network.

When however monolithically integrated telephone circuits are used, to actuate this second procedure there is a problem of sensitivity of the recognition device.

In fact, during the integration on one or more periods, the signal value generated by the integrator during the period can be much higher than the final value that indicates an eventual off-hook and, specially when the line current is not perfectly sinusoidale and has high peaks, it can not be compatible with the limited dynamics of the integrated circuits that are used.

On the other hand, being the direct current, due to the off-hook, much lower than the ringing alternate current, the line current cannot be alternated without lowering the sensitivity of detection.

The purpose of this invention is to provide a telephone circuit, monolithically integratable, for the ring trip detection, adapted to be used as an interface between a user's telephone line and a user's circuit line under the control of the exchange control equipment, which has a high certainty of detection of the off-hook in all of the different telephone network conditions and as compared with the known circuits a larger field of use.

This purpose is reached with the ring trip detection defined and characterized in the claim that concludes the present description.

The invention will be better understood from the following detailed description, given purely to furnish a non-limiting example, with reference to the attached diagrams, in which: FIGURE 1 represents a block diagram of a telephone circuit in conformity with the invention for the ring trip detection; FIGURE 2 represents the wave form of the current that, in conformity with the invention, is generated by a non-linear current transducer, included in the circuit of detection and coupled directly to the user's telephone line; FIGURE 3 represents a circuit diagram of a well known non-linear transducer of the type included in a detection circuit in conformity with the invention.

A telephone circuit in conformity with the invention for the ring trip detection includes a non-linear current transducer, represented in Fig. 1 with a block TR, in which the current transfer characteristic is indicated. Such current transducer is coupled to a user's telephone line, not represented in the figure, and is driven by the line current, $I_L$. In conformity with the invention the transducer TR provides an output current, $I_T$, proportional to the line current $I_L$ for values of the line current included between two predetermined threshold values, opposite in sign and equal in absolute value, $+I_S$ and $-I_S$ ; beyond such threshold values the current $I_T$ supplied by the transducer is maintained constant from variations of the line current $I_L$.

The limit values, opposite in sign and equal in absolute value, between which the current $I_T$ can linearly vary, are indicated as $+I_K$ and $-I_K$.

A current integrator, INT, is directly connected to the transducer TR : it generates a signal S having a value proportional to the value of the integral on the time, from a predetermined instant, of the current $I_T$ supplied by the transducer TR :

$$S = K \int_0^t I_T \, dt.$$

A control circuit means, $C_T$, connected to the integrator INT and driven by the user's line voltage, $V_L$, determines the integration intervals by means of control pulses that bring back, at predetermined instants, the integrator to the initial conditions.

In conformity with the invention the current $I_T$ is integrated on time intervals equal to one or more full periods of the line alternate voltage, the duration time of which coincides with that of the periods of the line current. In such a way the current defined integral value is different from zero only when there is a direct current component determined by the off-hook, that has shut off the conversation circuit on the line.

A comparator, COMP, connected to the integrator INT and to the control circuit means $C_T$, compares the signal S with a reference signal $S_{RIF}$ and generates, when the difference between the two signals, as a consequence of the effected off-hook, is different from zero and larger than a predetermined value, a signal $S_{OUT}$ which is adapted to inform the exchange control equipment, not represented in the diagrams, of the off-hook condition, so that the same equipment interrupts the generation of the call signals.

However the comparator is enabled from the control circuit means $C_T$ to send such signal to the exchange control equipment only when the integration of the current $I_T$ has been defined by the control circuit means $C_T$. In fact, as has already been stated, the value of an integral on the time of an alternate signal greatly varies during a period; therefore they can have intermediate values much higher than the final value, which can determine erroneously the interruption of the ringing rhythm. In fig. 2 the wave form is represented, limited to a time interval equal to a full period, T, of the output current $L_T$ of the transducer TR when, in the ringing phase, the off-hook has taken place and therefore a direct current $I_O$ is also on the line.

Assuming a proportionality ratio equal to one between the currents $I_L$ and $I_T$ in the linear part of the transfer characteristic of the transducer, such wave form, that is indicated in the figure with a straight line, is, between the two limit values $+I_K$ and $-I_K$, an exact replica of that of the line current $I_L$.

In fig. 2 instead a dotted line shows the peaks of the user's line current that are suitably smoothed by the transducer.

The limit values $+I_K$ and $-I_K$ are determined according to the characteristics of the line and of the apparatus connected to the line and to the level of the direct current $I_O$.

$A_1$ and $A_2$ indicate the areas defined by the wave form of $I_T$ in the semiperiods $t_1$ and $t_2$. Because of the direct current $I_O$ such areas and such semiperiods result to be different from one another.

The signal S generated from the integrator, proportional to the integral of the current $I_T$, or proportional to the area, provided with a sign, defined by its wave form, is a measure, when the integral is defined on a full period T by the control circuit means $C_T$, of the difference between the areas $A_1$ and $A_2$ : its value is therefore different from zero only when the off-hook has taken place and in the line there is also the direct current $I_O$.

For a greater reliability, since the value of such a defined integral can be in reality different from zero even when the off-hook hasn't taken place, a detection threshold is determined by the comparator that compares this value with a reference signal. Thanks to the non-linear TR transducer the problems of dynamics that arise with monolithically integrated telephone circuits are compleatly eliminated because, independently from the peak values of the line alternate current $I_L$, the maximum values of the current $I_T$ supplied by the transducer are always included within exact limits defined by its transfer characteristic.

However, since the characteristic of the transducer within the two threshold values is linear, the detection sensitivity for low levels of line current is not limited and therefore a circuit in conformity with the invention can be utilized in any line condition. Then, such threshold values being suitably selected and the characteristics of the user's line and terminal being known, the circuit operation can be optimized.

The circuit diagram of a well known non-linear transducer, which could be used to practice an off-hook detection circuit in conformity with the invention, is represented in fig. 3.

It includes a differential circuit comprising a first and a second PNP transistor $T_1$ and $T_2$, whose bases are the inputs of such differential circuit.

The base terminal $T_1$ is the input of the transducer, to which the user's line current, $I_L$ is applied; the base terminal $T_2$ instead is connected to the ground, whose potential is intermediate between the potentials of the positive pole, $+V_{CC}$, and of the negative pole, $-V_{CC}$, of a voltage supply generator to which the transducer is connected.

The emitters of $T_1$ and $T_2$ are connected to $+V_{CC}$ through a constant current generator $I_K$. The collector of $T_1$ is connected to the base of a third transistor, $T_3$, of the NPN type, and to the anode of a first diode $D_1$. The emitter of $T_3$ and the catode of $D_1$ are connected to $-V_{CC}$.

The collector of $T_2$ is connected to the bases of a fourth and a fifth transistor, $T_4$ and $T_5$, both of the NPN type, and to the anode of a second diode, $D_2$. The emitters of $T_4$ and $T_5$ and the catode of $D_2$ are connected to $-V_{CC}$.

The collector of $T_3$ is connected to the catode of a third diode, $D_3$, and to the bases of a sixth and a seventh transistor, $T_6$ and $T_7$, both of the PNP type.

The anode of $D_3$ and the emitters of $T_6$ and $T_7$ are connected to $+V_{CC}$.

The collector of $T_6$ is connected to the base of $T_1$ and to the collector of $T_4$.

The collectors of $T_5$ and $T_7$ are connected together to form a terminal to which the output current $I_T$ of the transducer is made available.

Between the base of $T_1$ and the ground two diodes are inserted, $D_4$ and $D_5$, parallel to each other, but in the opposite direction one from the other.

The function of such a transducer circuit, as appears to a person skilled in the art, is determined by the current generator $I_K$ that imposes the maximum absolute value, precisely equal to $I_K$, of the output current $I_T$.

The implementation of the INT integrator included in a detection circuit in conformity with the invention can instead be effected by means of a capacitor with a capacity C, of which a plate is connected to the ground and the other plate is connected to the output of the transducer TK and to an input of the comparator COMP, the latter being implemented in a known way. The two plates can be short-circuited through a switch controlled by the control circuit means $C_T$ by means of pulses at predetermined instants, spaced by one or more full periods of the line voltage (or current).

The capacitor, which is discharged every period for example, is then progressively charged, in the following period, by the transducer output current $I_T$: between its plates a voltage is established, variable in the time,

$$V_C = \frac{1}{C}\int_0^t I_T \, dt,$$

that can be used as signal S to be compared with a reference voltage $S_{RIF}$, by means of the comparator COMP.

The control circuit means $C_T$ can be implemented in a known way as a circuit that may be driven by the voltage of the user's line and that every period generates a pulse adapted to command the switch for the capacitor discharge and to enable the comparator to send an eventual detection signal to the exchange equipment. It can for example comprise a circuit known by the name of "zero crossing level circuit".

Although only one embodiment of the invention, has been illustrated and described, it is obvious that many modifications are possible without departing from the scope of the invention itself.

For example the signal S could be generated as a pulse only at the end of the time interval on which the integration of the current $I_T$ is defined.

In this way the detection signal generated by the comparator would be sent to the exchange equipment, without further commands from the control circuit means $C_T$ only at the end of the integration periods.

The control circuit means $C_T$ could then be driven by the line current itself, instead of the line voltage $V_T$.

## Claims

1. Telephone circuit for ring trip detection, adapted to operate as an interface between a user's telephone line and a user's line circuit under the control of the exchange control equipment, characterized in that it includes a current transducer (TR), coupled to the user's telephone line, for supplying a current ($I_T$) proportional to the user's line current ($I_L$) for values of such current comprised between two predetermined threshold values ($+I_S$ , $-I_S$ ), which are opposite in sign and equal in absolute value, the current ($I_T$) supplied by the transducer ($T_R$) being maintained constant when the said threshold values are reached, even if the line current ($I_L$) varies, beyond said threshold values; a current integrator (INT), that is coupled to such current transducer (TR) for generating a signal (S) having a value proportional to the value of the integral on the time of the current ($I_T$) supplied by the current transducer (INT), said integral being effected, from predetermined instants, on a time interval equal to at least a full period (T) of the voltage, or of the current, of the user's line ($I_L$); and a comparator (COMP), for comparing the signal (S) generated by the integrator (INT) with a reference signal ($S_{RIF}$) and for generating, if the difference between the two signals (S, $S_{RIF}$) exceeds a predetermined threshold, a signal which, at the end of every time interval on which the integration of the current ($I_T$) supplied by the transducer (TR) is effected, is used to inform the exchange control equipment that the off-hook has taken place.

## Revendications

1. Circuit téléphonique pour détection de disjonction de sonnerie d'appel, conçu pour fonctionner en interface entre une ligne téléphonique d'abonné et un circuit de ligne d'abonné sous commande de l'équipement de commande d'un central téléphonique, caractérisé en ce qu'il comporte un transducteur de courant (TR), couplé à la ligne téléphonique d'abonné, qui sert à délivrer un courant ($I_T$) proportionnel au courant ($I_L$) de la ligne d'abonné pour des valeurs de ce courant comprises entre deux valeurs de seuil prédéterminées ($+I_S$, $-I_S$), qui sont de même amplitude et de signes opposés, le courant ($I_T$) délivré par le transducteur (TR) étant maintenu constant lorsque lesdites valeurs de seuil sont atteintes, même si le courant de ligne ($I_L$) varie au-delà desdites valeurs de seuil ; un intégrateur de courant (INT), qui est couplé à ce tranducteur de courant (TR) afin de produire un signal (S) dont la valeur est proportionnelle à la valeur de l'intégrale sur le temps, du courant ($I_T$) délivré par le transducteur de courant (TR) , l'intégration s'effectuant, à partir d'instants prédéterminés, sur un intervalle de temps égal à au moins une

pleine période (T) de la tension, ou du courant, de la ligne d'abonné ($I_L$) ; et un comparateur (COMP), servant à comparer le signal (S) produit par l'intégrateur (INT) avec un signal de référence ($S_{RIF}$) et à produire, si la différence entre les deux signaux (S, $S_{RIF}$) dépasse un seuil prédéterminé, un signal qui, à la fin de chaque intervalle de temps sur lequel l'intégration du courant ($I_T$) délivré par le transducteur (TR) est effectuée, est utilisé pour informer l'équipement de commande du central téléphonique que le décrochement a eu lieu.

## Ansprüche

**1.** Telephonschaltung für Rufabschaltungserkennung, die dazu ausgelegt ist, als Schnittstelle zwischen einer Telephonleitung eines Benutzers und einer Leitungsschaltung des Benutzers unter der Steuerung der Vermittlungsamt-Steuerungseinrichtung zu wirken, dadurch gekennzeichnet, daß sie einen mit der Telephonleitung eines Benutzers gekoppelten Stromwandler (TR) beinhaltet zum Liefern eines zum Strom ($I_L$) der Benutzerleitung proportionalen Stroms($I_T$) für solche Stromwerte, die zwischen zwei vorbestimmten Schwellenwerten ($+I_S$, $-I_S$) liegen, die entgegengesetzte Vorzeichen und denselben absoluten Wert aufweisen, wobei der von dem Wandler (TR) gelieferte Strom ($I_T$) bei Erreichen der genannten Schwellenwerte selbst dann konstant gehalten wird, wenn der Leitungsstrom ($L_L$) über die genannten Schwellenwerte hinaus variiert; daß sie einen mit einem solchen Stromwandler (TR) gekoppelten Stromintegrator (INT) beinhaltet zum Erzeugen eines Signals (S) mit einem Wert, der zu dem Wert des zeitlichen Integrals des von dem Stromwandler (INT) gelieferten Stroms ($I_T$) proportional ist, wobei das Integral von vorbestimmten Zeitpunkten aus über ein Zeitintervall gebildet wird, das wenigstens einer vollen Periode (T) der Spannung oder des Stroms der Benutzerleitung ($I_L$) entspricht; und daß sie einen Komparator (COMP) beinhaltet zum Vergleichen des von dem Integrator (INT) erzeugten Signals (S) mit einem Bezugssignal ($S_{RIF}$) sowie zum Erzeugen, wenn die Differenz zwischen den beiden Signalen (S, $S_{RIF}$) einen vorbestimmten Schwellenwert übersteigt, eines Signals, das am Ende jedes Zeitintervalls, über das die Integration des von dem Wandler (TR) gelieferten Stroms ($I_T$) durchgeführt wrid, dazu verwendet wird, die Vermittlungsamt-Steuerungseinrichtung zu informieren, daß der Hörer abgenommen worden ist.

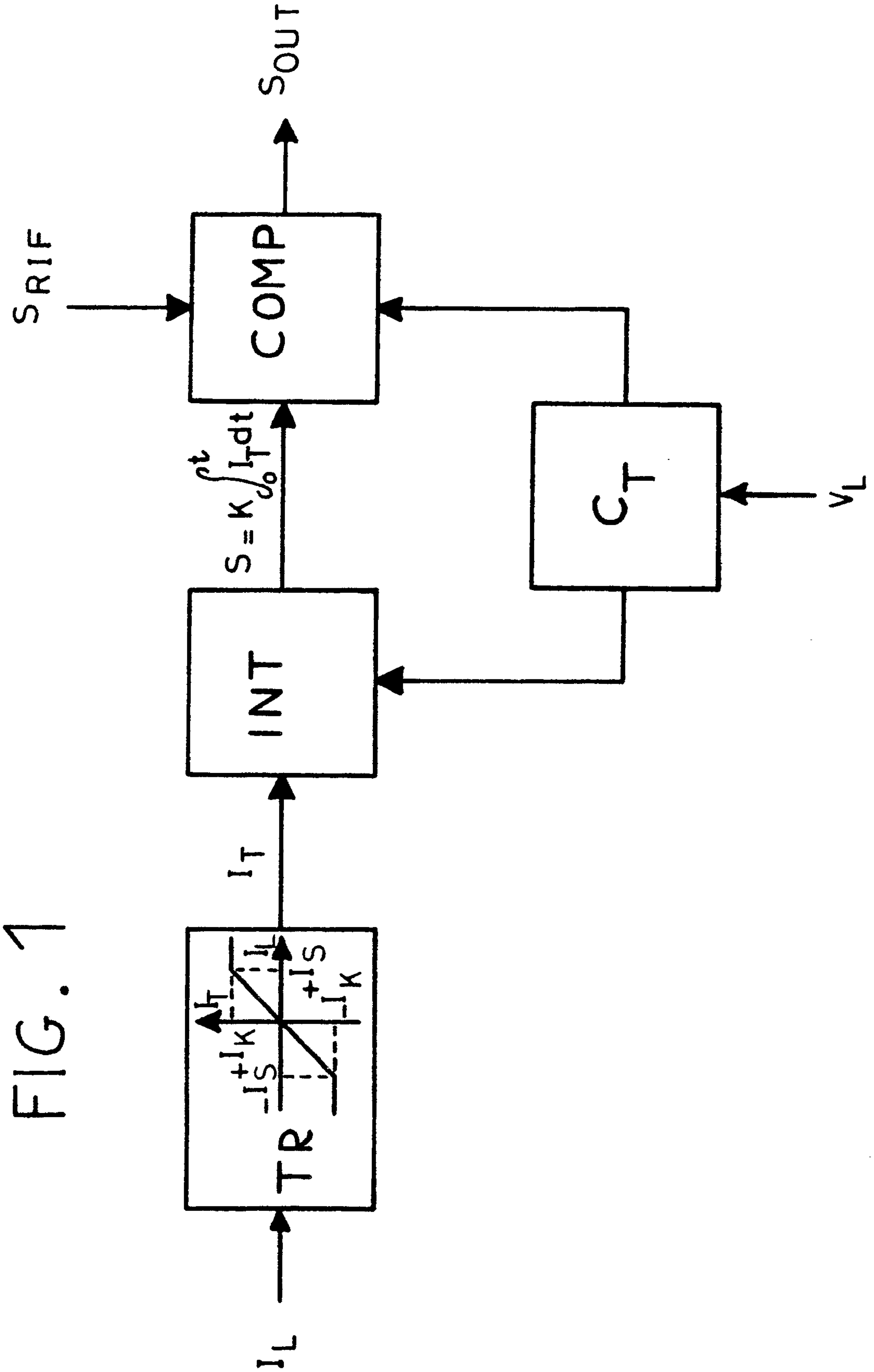


FIG. 1

FIG. 2

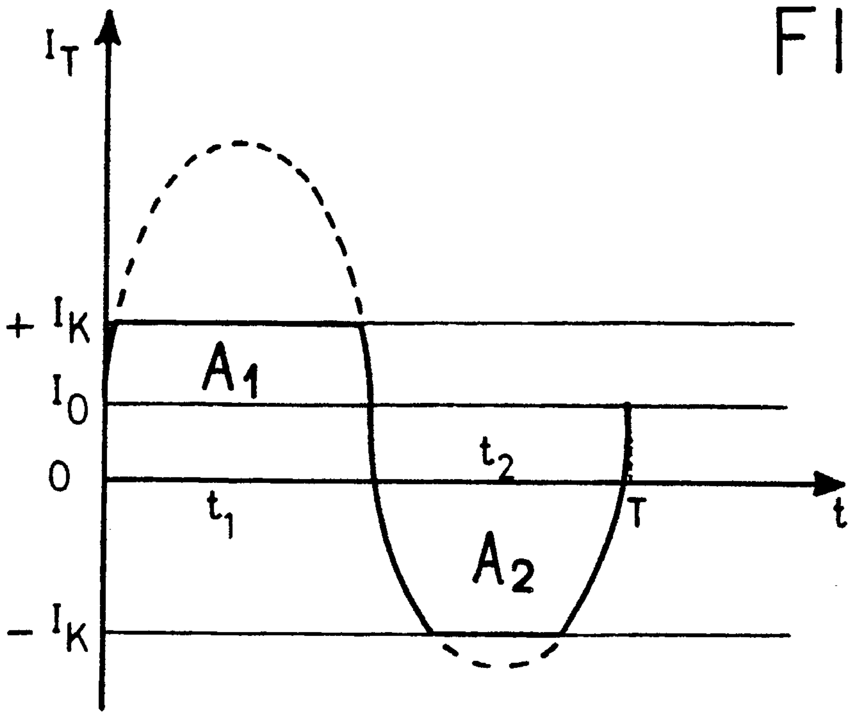
$I_T$
$+I_K$
$A_1$
$I_0$
0
$t_2$
$t_1$
T
t
$A_2$
$-I_K$

FIG. 3

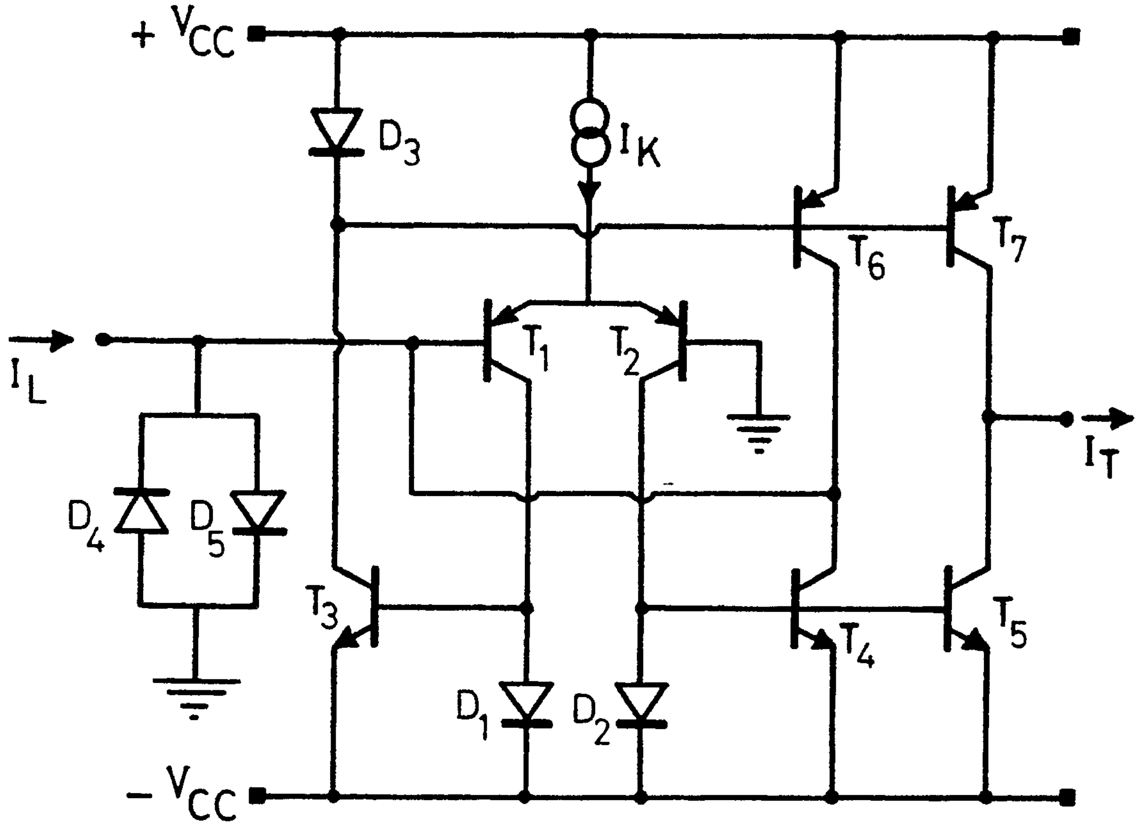
$+V_{CC}$
$D_3$
$I_K$
$T_6$
$T_7$
$I_L$
$T_1$
$T_2$
$I_T$
$D_4$
$D_5$
$T_3$
$T_4$
$T_5$
$D_1$
$D_2$
$-V_{CC}$